# EUROPEAN PATENT APPLICATION

(11) **EP 4 653 372 A1**
(43) Date of publication of application: **26.11.2025**
(21) Application number: 24177976.8
(22) Date of filing: 24.05.2024
(51) Int. Cl.: B66C 1/34, E02F 9/26, F16M 11/00, F16M 13/02, G03B 17/56, G06Q 50/08, G06T 17/00, G06V 20/10, B66C 13/46, B66C 23/26

(54) **DEVICE AND METHOD FOR GENERATING A 3D DIGITAL REPRESENTATION OR AN ORTHOPHOTO**

(71) Applicant: InUnum AG, 9491 Ruggell (LI)
(72) Inventor: Hackl, Eberhart, 9491 Ruggell (LI)
(74) Representative: Torggler & Hofmann Patentanwälte - Rankweil

(57) **Abstract**

A device and a method for generating a 3D digital representation or orthophoto of an object (8) or a scene, in particular of an object (8) or scene located on a construction site, wherein a mobile 2D camera (7) is moved along a path (9) above the object (8) or scene to be captured by a lifting device (1), preferably in the form of a construction crane, a vehicle crane or an excavator, the mobile 2D camera (7) captures a plurality of 2D photos of the object (8) or scene at a plurality of positions along the path (9) at least one electronic processor (13, 16) creates the 3D digital representation or orthophoto of the object (8) or scene on the basis of the plurality of 2D photos of the object (8) or scene, and the 3D digital representation or orthophoto of the object (8) or scene is made available via at least one digital interface (15, 16), also a computer program and a data carrier signal.

## Description

The disclosure is in the field of generating a 3D digital representation or an orthophoto of objects or scenes, in particular of objects and/or scenes which are located on construction sites.

3D digital representations or orthophotos of objects or scenes, in particular of objects or scenes which are located on construction sites, are used for a plurality of reasons, e. g., for creating a documentation of a construction site or a building, monitoring of a construction site, creating a complete or partial digital twin of a building, and measuring the location of objects on construction sites.

It has been known in the art to generate a 3D digital representation or an orthophoto of an object or scene from a set of images taken from different positions by means of photogrammetry.

It has been known in the art to generate a 3D digital representation of an object or scene using an unmanned aerial vehicle (UAV, colloquially: drone) equipped with a 2D camera. However, it is not possible to operate UAVs at every construction site, e. g, operation of UAVs could be forbidden for security reasons. Furthermore, UAVs are not readily available at every construction site, e. g., due to monetary considerations or the availability of persons trained to operate them. Operating a UAV might be temporarily impossible, e. g., due to weather influences.

It has been also disclosed on Linkedln by HPM Vermessung to attach a LIDAR scanner to a crane arm in order to directly create a 3D digital representation of an object. A LIDAR scanner is another type of not readily available and expensive hardware.

It is an object to provide a device and a method which allow to generate a 3D digital representation or an orthophoto with the same level of detail as if an UAV or a LIDAR were used but without the above-mentioned disadvantages.

This object is achieved by a device with the features of claim 1 and a method with the features of claim 8. Protection is also sought for a computer program having the features of claim 12 and a data carrier signal transmitting such a computer program.

A device for creating a 3D digital representation or an orthophoto of an object and/or a scene, in particular of an object or a scene located on a construction site, comprises at least:
- a ground-based lifting device, preferably in the form of a construction crane, a vehicle crane or an excavator, having at least one moveable arm, wherein the at least one arm has at least one load receiving means which is arranged to be moved in three dimensions and wherein the at least one load receiving means is to be moved by the lifting device along a path above the object or scene to be captured
- a mobile 2D camera which is attached to the at least one load receiving means, wherein the 2D camera is configured to capture a plurality of 2D photos of the object or scene at a plurality of positions along the path
- at least one electronic processor which is configured to create the 3D digital representation or orthophoto of the object or scene on the basis of the plurality of 2D photos of the object or scene
- a digital interface for making available the 3D digital representation or the orthophoto of the object or scene

In the method for generating a 3D digital representation or an orthophoto of an object and/or a scene, in particular of an object or scene located on a construction site:
- a mobile 2D camera is moved along a path above the object or scene to be captured by a lifting device, preferably in the form of a construction crane, a vehicle crane or an excavator
- the mobile 2D camera captures a plurality of 2D photos of the object or scene at a plurality of positions along the path
- at least one electronic processor creates the 3D digital representation or orthophoto of the object or scene on the basis of the plurality of 2D photos of the object or scene
- the 3D digital representation or orthophoto of the object or scene is made available via at least one digital interface

A mobile 2D camera is understood to be any device capable of capturing (taking) 2D photos and which is not stationary.

A 3D digital representation is understood to be a digital model which has information about an object or scene in three dimensions and which can be viewed from arbitrary angles.

An orthophoto of an object or scene is understood to be a photographical representation of an object or a scene which can be used to measure true distances of the object or the scene. An orthophoto of an object or scene can be generated based on a 3D digital representation of the object or scene or based on a plurality of 2D photos which are used to adjust for camera effects such as lens distortion and camera tilt.

The phrase "above the object or scene" can mean a vertical distance from the object or scene but can also mean a horizontal distance from the object or scene, e. g., when a 2D photo of an object in the form of a vertical wall is to be captured.

The present disclosure makes use of readily available mobile 2D cameras, e. g., in the form of a cell phone, a tablet, a mobile computer, or the like. As some kind of lifting device, usually in the form of a construction crane or a vehicle crane will be present at a construction site anyway, no additional hardware (except maybe a carrier mount or duct tape for attaching the mobile 2D camera to the load receiving means) for moving the mobile 2D camera around is needed.

The present disclosure allows for an uncomplicated periodical documentation of the construction progress that requires no skilled personnel to operate it. The 3D representation or orthophoto is available within one to two hours after the measurement and allows for cross-checks with construction plans and immediate actions in case of incorrect installations (e. g. misplaced pipes or wall position markings).

Preferred embodiments are defined by dependent claims.

In some embodiments the load receiving means is in the form of a rope. It has been found that the length of the rope is not relevant as long as each position on the path can be reached. A pendulum movement of the rope can be corrected when generating the 3D digital representation or orthophoto provided that the pendulum movement is slow enough to not cause motion blur.

In some embodiments the mobile 2D camera comprises a camera which is configured to make 2D photos at pre-determined times or at pre-determined locations of the path.

In some embodiments the mobile 2D camera comprises an electronic processor, a camera and a first digital interface wherein the electronic processor is configured to capture 2D photos together with the camera and to share them via the first digital interface, preferably while the mobile 2D camera is attached to the load receiving means.

In some embodiments the mobile 2D camera comprises or is coupled to a position determination device, preferably a global navigation satellite system.

In some embodiments the at least one electronic processor which is configured to create the 3D digital representation or orthophoto of the object or scene on the basis of the plurality of 2D photos of the object or scene is arranged within a server which is configured to communicate with the mobile 2D camera via a second digital interface.

In some embodiments the at least one load receiving means is that load receiving means which is used to transport a load by the lifting device whenever the mobile 2D camera is not attached to the load receiving means.

In some embodiments the mobile 2D camera is in the form of a cell phone, a tablet, or a mobile computer with wireless connectivity.

In some embodiments the mobile 2D camera is detachably attached to at least one load receiving means of the ground-based lifting device before capturing the plurality of 2D photos of the object and is removed from the at least one load receiving means after capturing the plurality of 2D photos of the object.

In some embodiments a path is used which comprises overlapping and/or crossing paths.

An embodiment is discussed based on the Figures.
Figure 1 shows an embodiment in a side view.
Figure 2 shows the embodiment of Figure 1 in a top view.
Figure 3 shows a schematic of the device used in the embodiment of Figures 1 and 2.

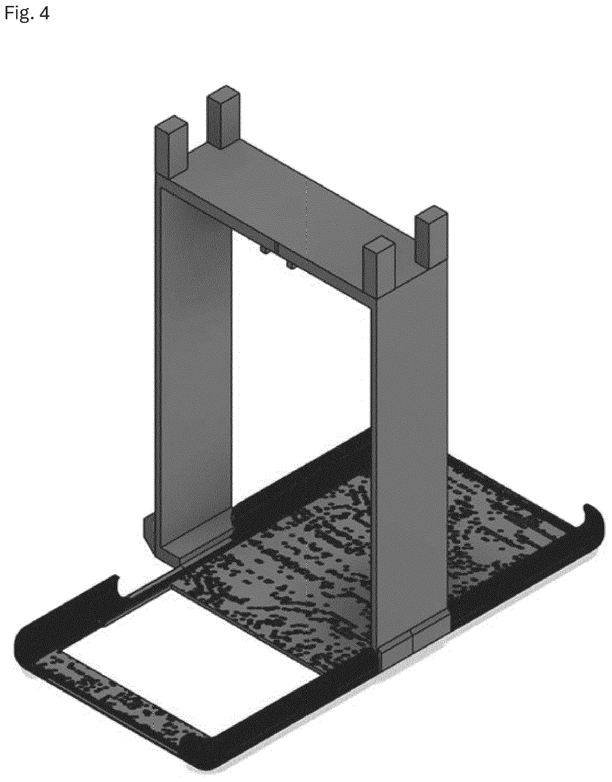

Figure 4 shows an example of a carrier mount for a mobile phone and a small GPS RTK receiver that can be attached to the hook of a crane. Preferably this carrier is additionally secured to the hook block using straps.
Figure 5 shows an example of a path used for capturing the object or scene.

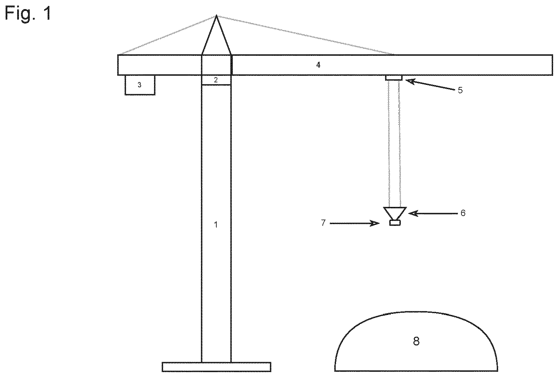

In Figure 1 the object 8 to be captured is shown in a very schematic way
A 3D digital representation or an orthophoto of the object 8 and the scene comprising the object 8 is generated on the basis of a plurality of 2D photos using a device which comprises a lifting device1 in the form of a construction crane, having at least one moveable arm 4 which can be moved around by a turntable 2.

The at least one arm 4 has at least one load receiving means 6 (e. g. a hook, a hoisting device or the like) which can be moved around a vertical axis by way of the turntable 2 and around a horizontal plane by way of a combination of the motions of a trolley 5 and a hoisting device which is used to elevate and lower the hoisting means 6 such that in total a 3D motion of the load receiving means 6 can be achieved.

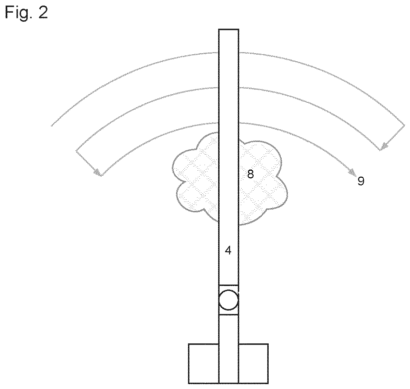

A mobile 2D camera 7 is detachably attached to the at least one load receiving means 6 and can be moved around together with the at least one load receiving means 6. The lifting device 1 is configured to move the at least one load receiving means 6 along a path 9 above the object 8 to be captured (cf. Figure 2), and the mobile 2D camera 7 is configured to capture a plurality of 2D photos of the object 8 and the scene to be captured at a plurality of positions along the path 9.

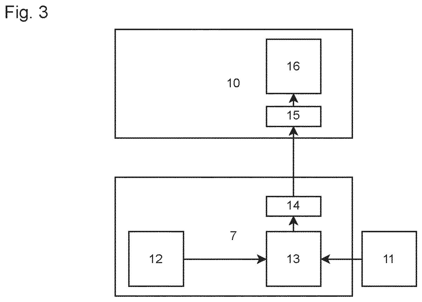

At least one electronic processor 13, 16 (cf. Figure 3) is configured to capture the 3D digital representation or an orthophoto of the object 8 and/or the scene on the basis of the plurality of 2D photos of the object 8 and the scene to be captured.

Figure 2 shows a path 9 which is chosen such that an accurate 3D digital representation or an orthophoto of the object 8 or scene can be created on the basis of 2D photos which are captured by the mobile 2D camera 7 at a plurality of positions along the path 9.

In Figure 3 a device is schematically shown comprising a server 10 which comprises a processor 16 and a second digital interface 15 and a mobile 2D camera 7which comprises a camera 12, a processor 13 and a first digital interface 14 and which is connected to an RTK receiver 11 for an independent position determination device in the form of a global navigation satellite system.

The mobile 2D camera 7 captures a plurality of 2D photos of an object 8 and/or a scene to be captured using a camera 12, the processor 13 and the receiver 11. These 2D photos are transmitted to the server 10 by the first digital interface 14 and the second digital interface 15. The server 10 creates the 3D digital representation and/or orthophoto of the object 8 and/or scene on basis of the 2D photos using a processor 16 and software which is known in the art. The 3D digital representation and/or orthophoto is made available via the second digital interface 15.

If the highest possible accuracy is required, an independent position determining device such as an RTK receiver 11 may be connected to the mobile 2D camera 7.

The mobile 2D camera 7 is configured to periodically take a 2D photo of the desired object 8. Commonly, a 2D photo every 3 seconds is sufficient. To fully capture an object 8 or a scene using a normally-sized tower crane typically 150 - 200 images are adequate.

The camera of the mobile 2D camera 7 supports a sufficiently short exposure time to avoid motion blur. A shutter speed of 1/1000^{th} of a second or faster is desirable.

Moreover, the image sensor of the mobile 2D camera 7 should have a sufficient resolution. For photogrammetry a resolution of 12 MP and more is recommended. This is nowadays achieved by state-of-the-art mobile phone image sensors.

Overlapping 2D photos are preferred for photogrammetry. The identification of the same structures on 2D photos taken at different positions is important for the generation of a 3D digital representation or an orthophoto of the captured object 8 or scene. The required overlaps in the movement direction of the mobile 2D camera 7 (front overlap) as well as perpendicular to it (side overlap) are typically chosen to amount to around 80 %. This requires the path to be planned accordingly and to include crossing previous parts of the path. Moreover, it may require the adjustment of the image-taking period or, alternatively, the speed of the movement of the mobile 2D camera 7.

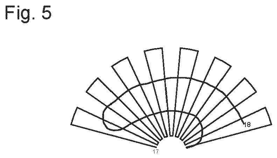

Figure 5 depicts a realistic path 9 that involves less crane rotation in comparison with the one shown in Figure 2 and includes crossing previous parts of the path 9. Initially, starting at position 17, the hook block (with a mobile 2D camera 7 attached) is moved radially in outward direction, then the crane rotates by 10 degrees and the hook block is moved radially inward. Subsequently, another rotation by 10 degrees is performed and the hook block is moved in outward direction again. This procedure is resumed until the region of interest is fully covered. Finally, an additional traversing movement is made in which the crane rotates back close to its initial position and back, while moving the hook block in such a way to ideally sample the full region of interest as well. The movement ends at position 18.

The capturing process is best performed by moving the at least one load receiving means 6 to which a mobile 2D camera 7 is attached to an intermediate height that allows for sufficient resolution of details while providing an adequate amount of 2D photo overlap.

Preferably the 2D photos taken by the mobile 2D camera 7 are immediately sent to a server 10 for further processing. Alternatively, the 2D photos may be uploaded to the server 10 at any later date.

The uploaded data on the server 10 are processed by a known photogrammetry algorithm to generate a 3D digital representation and/or an orthophoto of the object 8 and/or scene.

During the capturing process the crane cannot be used simultaneously for construction work.

The mobile 2D camera 7 may take 2D photos triggered by an arbitrary out-of-the-shelf software or by a customized application running on the mobile 2D camera 7.

A customized application may provide the additional functionality of combining images and optional RTKGPS data and submitting them to the server 10 immediately.

The resulting 3D digital representation or orthophoto may be provided (e. g. by means of a web viewer) on the same mobile 2D camera 7 that was used for the capturing process. Alternatively, the result may be transferred to and displayed on any device connected to the internet, with the corresponding permission to view the data.

### List of reference signs:

- 1: lifting device
- 2: turntable
- 3: counterweight
- 4: arm
- 5: trolley
- 6: load receiving means
- 7: mobile 2D camera
- 8: object to be captured
- 9: path
- 10: server
- 11: RTK receiver
- 12: camera
- 13: electronic processor
- 14: first digital interface
- 15: second digital interface
- 16: electronic processor
- 17: position
- 18: position

## Claims

1. A device for creating a 3D digital representation and/or an orthophoto of an object (8) and/or a scene, in particular of an object (8) and/or a scene located on a construction site, comprising:
- a ground-based lifting device (1), preferably in the form of a construction crane, a vehicle crane or an excavator, having at least one moveable arm (4), wherein the at least one arm (4) has at least one load receiving means (6) which is arranged to be moved in three dimensions and wherein the at least one load receiving means (6) is to be moved by the lifting device (1) along a path (9) above the object (8) or scene to be captured
- a mobile 2D camera (7) which is attached to the at least one load receiving means (6), wherein the 2D camera (7) is configured to capture a plurality of 2D photos of the object (8) or scene at a plurality of positions along the path (9)
- at least one electronic processor (16) which is configured to create the 3D digital representation or an orthophoto of the object (8) or the scene on the basis of the plurality of 2D photos of the object (8) or scene
- a digital interface (14, 15) for making available the 3D digital representation or orthophoto of the object (8) or scene.

2. The device of the preceding claim wherein the mobile 2D camera (7) comprises a camera (12), which is configured to make 2D photos at pre-determined times or at pre-determined locations of the path (9).

3. The device of one of the two preceding claims wherein the mobile 2D camera (7) comprises an electronic processor (13), a camera (12) and a first digital interface (14) wherein the processor (13) is configured to capture 2D photos together with the camera (12) and to share the 2D photos via the first digital interface (14), preferably while the mobile 2D camera (7) is attached to the load receiving means (6).

4. The device of at least one of the preceding claims wherein the mobile 2D camera (7) comprises or is coupled to an independent position determination device, preferably an RTK receiver (11).

5. The device of at least one of the preceding claims wherein at least one electronic processor (16) which is configured to create the 3D digital representation or orthophoto of the object (8) or scene on the basis of the plurality of 2D photos of the object (8) is arranged within a server (10) which is configured to communicate with the mobile 2D camera (7) via a second digital interface (15).

6. The device of at least one of the preceding claims wherein the at least one load receiving means (6) is that load receiving means (6) which is used to transport a load by the lifting device (1) whenever the mobile 2D camera (7) is not attached to the load receiving means (6).

7. The device of at least one of the preceding claims wherein the mobile 2D camera (7) is in the form of a cell phone, a tablet, or a mobile computer with wireless connectivity, and wherein preferably the cell phone, tablet, or mobile computer is removably attached to the load receiving means (6) via a carrier to which the cell phone, tablet, or mobile computer is removably attached and which itself is removably attached to the load receiving means (6).

8. A method for generating a 3D digital representation and/or an orthophoto of an object (8) and/or a scene, in particular of an object (8) or a scene located on a construction site, wherein:
- a mobile 2D camera (7) is moved along a path (9) above the object (8) or scene to be captured by a lifting device (1), preferably in the form of a construction crane, a vehicle crane or an excavator
- the mobile 2D camera (7) captures a plurality of 2D photos of the object (8) or scene at a plurality of positions along the path (9)
- at least one electronic processor (13, 16) creates the 3D digital representation or orthophoto of the object (8) or scene on the basis of the plurality of 2D photos of the object (8) or scene
- the 3D digital representation or orthophoto of the object (8) or scene is made available via at least one digital interface (15, 16).

9. The method of the preceding claim wherein the mobile 2D camera (7) is detachably attached to at least one load receiving means (6) of the ground-based lifting device (1) before capturing the plurality of 2D photos of the object (8) or scene and is removed from the at least one load receiving means (6) after capturing the plurality of 2D photos of the object (8) or scene.

10. The method of one of the two preceding claims wherein a path (9) is used which comprises overlapping and/or crossing parts.

11. The method of at least one of the three preceding claims wherein a mobile 2D camera (7) in the form of a cell phone, tablet, or mobile computer having wireless connectivity is used.

12. A computer program, preferably in the form of an app, which when executed on a cell phone, tablet, or mobile computer with wireless connectivity configures the cell phone, tablet, or mobile computer as a mobile 2D camera (7) to be used in a device of at least one of claims 1 to 7 or a method of claim 11.

13. A data carrier signal transmitting the computer program of the preceding claim.
